# EUROPÄISCHE PATENTANMELDUNG

(11) **EP 2 735 459 A1**
(43) Veröffentlichungstag der Anmeldung: **28.05.2014**
(21) Anmeldenummer: 13005341.6
(22) Anmeldetag: 12.11.2013
(51) Int. Cl.: B60D 1/54, B60D 1/155

(54) **Diagonal klappbares Zugrohr (Deichsel) für einen Anhänger**

(30) Priorität: 22.11.2012 DE 202012011230 U
(71) Anmelder: Wenner, Stefan, 72186 Empfingen (DE)
(72) Erfinder: Wenner, Stefan, 72186 Empfingen (DE)

(57) **Zusammenfassung**

Die Erfindung bezieht sich auf ein klappbares Zugrohr für einen Anhänger, wobei die Drehachse des Gelenks als Raumdiagonale ausgerichtet ist. Dadurch wir mit einem einzigen Gelenk sowohl ein Wegklappen zur Seite als auch in die Senkrechte ermöglicht. Dies ermöglicht platzsparendes Verstauen und Auslieferung des Anhängers bei relativ langen Zugrohrlängen, und auch geneigte Ladeflächen fürs Beladen. Bei Auflaufeinrichtungen (40) ermöglicht es die Verwendung des Handbremshebels (3) in beiden abgeklappten Zuständen.

## Beschreibung

Die Erfindung betrifft ein Zugrohr (Deichsel) für Transportanhänger, welches zum Platzsparen bei der Einlagerung und bei der Auslieferung wegklappbar ist und mit nur einem Drehgelenk sowohl zur Seite als auch nach oben geschwenkt werden kann.

Transportanhänger für PKW sind sowohl im privaten als auch gewerblichen Bereich zu finden. Im unteren Gewichtsbereich sind sie in der Regel mit einer ungebremsten Laufachse ausgestattet, im oberen Gewichtsbereich sind sie tendenziell mit einer oder 2 Achsen und einer Auflaufbremse ausgestattet. Die Deichsel kann sowohl als Mitteldeichsel (Zugrohr) oder V-Deichsel (Zugholme) ausgestattet sein. Beide Varianten sind sowohl ungebremst als auch mit einer Auflaufeinrichtung im Einsatz. Im Sinne der Erfindung sind mit einem Zugrohr alle konstruktiven Deichselformen und Zugholme und Kombinationen hieraus gemeint. Dies betrifft Zugrohre mit rundem, vierkant oder sonstigem Querschnitt, oder auch V-Deichseln, welche im vorderen Bereich mittels eines zentralen Zugrohrs weitergeführt werden.

Bei vielen Anhängern ist der nutzbare Teil der Ladefläche bzw. die Ladung vorne klar abgegrenzt. Dies ist z.B. bei einem Kastenaufbau die Vorderkante der vorderen Bordwand, bei einem Motorradanhänger die Einfahrgabel für das Vorderrad oder bei einem Bootsanhänger der Bug. Die Länge des Zugrohrs als Verbindung zum Zugfahrzeug hat sowohl beim Vorwärts- als auch beim Rückwärtsfahren einen entscheidenden Einfluss auf das Fahrverhalten. Bei Anhängern mit Kastenaufbau ist die freie Deichsellänge, also das Mass zwischen Zugkugelkupplung und Vorderkante des Kastenaufbaus ca. 85 bis 160 cm. Besonders lange Abmessungen ermöglichen zwar das gute Fahrverhalten, brauchen aber sowohl beim Einlagern (parken) als auch bei der Auslieferung (z.B. ein LKW-Zug mit mehreren Anhängern beladen) viel Stellfläche, bzw. bei einem senkrechten Aufstellen mit dem Heck nach unten brauchen sie eine entsprechende Höhe.

Für Zugrohre gibt es verschiedene Konzepte zum Klappen. Bei den gängigsten Einsatzvarianten wird tendenziell unterschieden zwischen:
a) Zugrohre mit einem oder 2 verstellbaren Drehgelenken, sodass die Höhe der Zugkugelkupplung z.B. für verschiedene Zugfahrzeuge einstellbar ist. Bei 2 Gelenken erlaubt dies, dass der vordere Teil mit der Zugkugelkupplung unabhängig von der eingestellten Höhe immer horizontal ist, was auch wichtig für die Funktion der ggfs. im vorderen Teil integrierten Auflaufeinrichtung ist.
b) Zugrohre mit einem Drehgelenk, sodass das Zugrohr quasi senkrecht hochgestellt werden kann. Dies ist dann zwar keine Fahr-Einstellung, aber spart Platz beim Parken. Dies ist oft bei Verkaufsanhängern auf Märkten zu finden.
c) Zugrohre mit einem Drehgelenk, wobei die Drehverstellung genutzt wird, um zum Beladen des Anhängers das Heck abzusenken. Damit lassen sich z.B. bei einigen Motorradanhängern oder Fahrzeugtransportern die Fahrzeuge aufschieben, ohne dass eine zusätzliche Auffahrschiene notwendig ist.
d) Zugholme mit einer Klappeinrichtung, sodass der gesamte Anhänger (z.B. offener Kastenaufbau) abkippbar sind. Diese sind dann oft auch so auf dem Heck in einer Garage aufstellbar, sodass die Zugholme abgeklappt nach unten zeigen, und so eine ca. 2 m lange Ladefläche senkrecht in eine Standardgarage passt.

Alle oben genannten klappbaren Deichseln legen in der Regel eine Schwenkbewegung zugrunde, bei der die Drehachse parallel zur Radachse des Anhängers ist.

Ziel der Erfindung ist es ein Zugrohr mit einer neuen Klappvorrichtung anzubieten, welche sowohl den Nutzern beim Verstauen (parken) als auch den Herstellern beim Ausliefern erlaubt, zwischen 2 Arten des Wegklappens zu wählen. Diese universelle Klappvorrichtung ist insofern interessant, dass für jeden einzelnen Anhänger beide Richtungen ermöglicht werden. Wenn z.B. Anhänger auf eine LKW geladen werden und sie dabei auf der Heckklappe stehen, ist ein Wegklappen zur Seite hilfreich. Beim Endverbraucher in der Garage kann ein Wegklappen nach oben besser sein.

Das Wegklappen wird gelöst, indem man mit nur einem einzigen Drehelement sowohl das Wegklappen zu einer Seite, als auch in die Senkrechte (z.B. nach oben) ermöglicht. Hierzu werden wie auch bei verschiedenen höhenverstellbaren Zugrohren ein Paar Zahnscheiben verwendet, welche gegenseitig um eine Spannschraube verdreht werden können, an verschiedenen Stellen mittels der Verzahnung eingreifen können, und mittels der Spannschraube und einer Verlustsicherung sicher und spielfrei miteinander verbunden sind.

Hauptunterscheidungsmerkmal zu anderen Drehgelenken ist, dass bei dieser Erfindung die Drehachse nicht parallel zur Radachse ausgerichtet ist, sondern als Diagonale im Raum.

Anmeldungen WO88/02703, EP 0326570, DE10052437B4, DE202004008125U1 zeigen alle eine Schwenkbewegung um eine Achse parallel zur Radachse und sind damit in der Bewegung eingeschränkt.

Anmeldung 11004089.6 zeigt ein Wegklappen in eine seitlich abstehende Position, allerdings wird dies durch 2 nacheinander auszuführende Schwenkbewegungen erreicht, erst nach unten und von dort zur Seite. Ein gleichzeitiges Klappen nach oben ist nicht möglich und ein spielfreies Festklemmen ist nicht einfach zu gewährleisten.

Für die Richtung der Drehachse sind mehrere Varianten denkbar. Als Idealstellung wird hier eine Ausrichtung beschrieben, mit der sowohl die Stellung des vorderen Zugrohrteils horizontal genau 90 Grad zu einer Seite als auch in die Senkrechte (z.B. nach oben) erreicht werden kann. Dies wird jeweils durch eine 120 Grad Schwenkbewegung des Zugrohrs erreicht, was verlangt, dass auch die Zähneeinteilung dies erlaubt. Ein Wiederfeststellen nach 120 Grad Verdrehung benötigt daher eine durch 3 teilbare Zähnezahl, z.B. 24, 30, 36.

Diese Art des Schwenkens um eine raumdiagonale Achse sowohl zur Seite als auch noch oben ist allerdings insofern eingeschränkt, dass nicht zu beiden Seiten und nach oben und nach unten geschwenkt werden kann, sondern nur zu einer Seite und in einer Richtung der Senkrechten (also entweder nach oben oder nach unten je nach Ausrichtung der Drehachse).

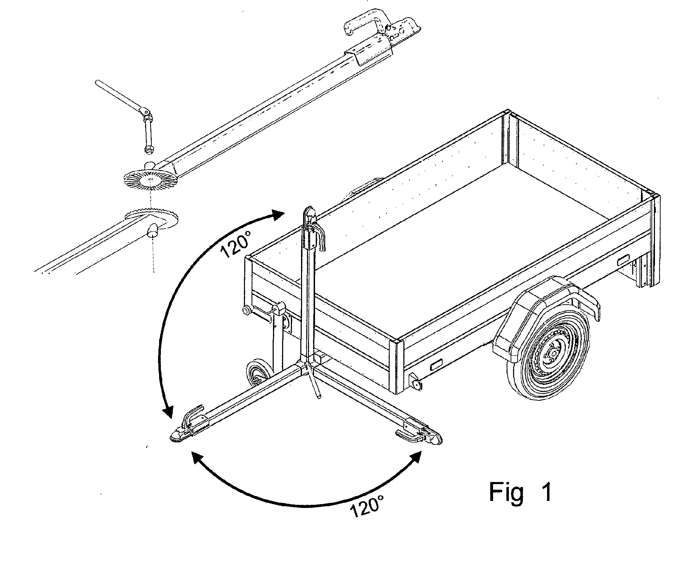

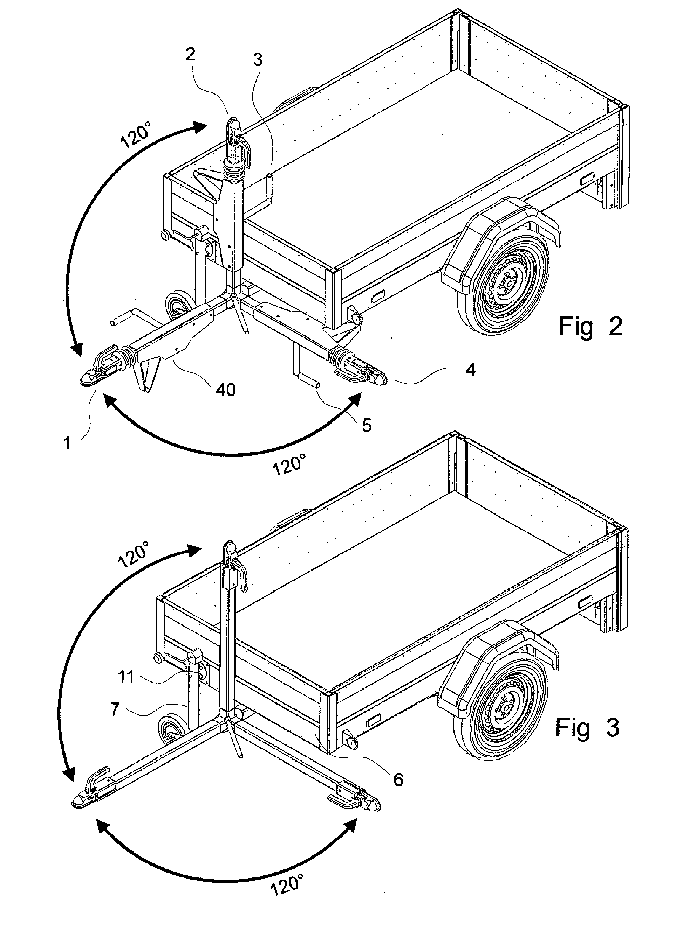

In dem gewählten Blickwinkel von Fig 2 und Fig 3 zeigt die Drehachse des Zugrohrdrehelements genau als Normale aus der Zeichnungsebene heraus, wodurch die 120 Grad Schwenkbewegungen klar sichtbar werden.

Fig 2 zeigt den entscheidenden Vorteil dieser Art der Schwenkbewegung, die Platzeinsparung durch die Orientierung des Zugrohrs in den beiden abgeklappten Positionen. Z.B. steht nach einer Schwenkbewegung um 120 Grad aus der normalen Fahrstellung (1) heraus das Zugrohr in die Senkrechte nach oben (2). Das Zugrohr hat speziell bei Verwendung einer Auflaufeinrichtung (40) einige Komponenten (z.B. Feststellbremshebel), welche im Fahrzustand sich vom Zugrohr aus nach oben und unten erstrecken. Im Zustand des senkrecht aufgestellten Zugrohrs zeigen diese Anbauteile nach rechts und links. Dadurch wird noch mehr Platz bezogen auf die Fahrrichtung eingespart. Die Komponenten des Zugrohrs können relativ nah an die Vorderwand der Ladefläche (6) oder des Kastenaufbaus positioniert werden. Ein weiterer entscheidender Vorteil ist, dass die Betätigung des Bremshebels (3) immer noch möglich ist. Im Zustand des horizontal abgeklappten Zugrohrs (4) können die sonst nach unten abstehenden Teile unter die Ladefläche des Kastenaufbaus ragen und auch in dieser Stellung kann der Handbremsgriff (5) betätigt werden.

Fig 3 zeigt die gleiche Bewegung mit einer ungebremsten Version, also ohne Auflaufeinrichtung im Zugrohr. Fig 3 zeigt auch, dass eine Anbringung des Stützradss (7) am Chassis oder der Kastenaufbauvorderseite von Interesse ist, um die Funktion des Rades bei abgeklapptem Zugrohr weiterhin zu ermöglichen. Hier eignen sich z.B. auch Stützräder mit horizontal verlaufener Kurbelwelle und mit einer Wegschwenkeinrichtung (11).

Die für die Idealstellungen des Zugrohrs wie in Fig 2 gezeigt (genau 90 Grad zu einer Seite und 90 senkrecht nach oben klappbar) notwendige Ausrichtung der Drehachse im Raum kann wie folgt beschrieben werden. Unter der vereinfachten Annahme, dass die Deichsel aus einem Vierkantstab (quadratisch) und ohne abgerundete Kanten besteht, stelle man sich im Bereich des Drehpunktes einen Würfel vor. Bei einer Vierkant-Deichsel mit 70 mm Kantenlänge wäre dies ein 70 mm langes Segment der Deichsel genau am Drehpunkt. Die Drehachse verläuft dann genau als Raumdiagonale dieses Würfels.

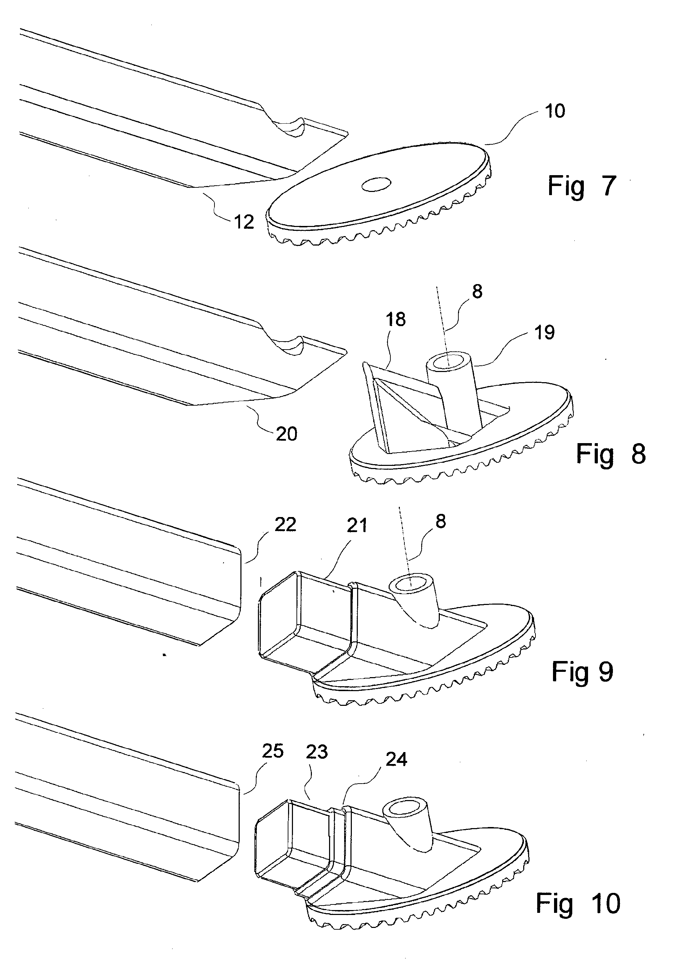

Anders ausgedrückt erhält man die Drehfläche auch auf folgende Weise: Die Drehfläche ist die Ebene, in welcher die Zahnscheiben liegen, und aus welcher die Drehachse als Normale senkrecht herauszeigt. Die Drehfläche ist zum Beispiel die Schnittfläche des abgesägten Deichselrohrs, an welche eine Zahnscheibe flach aufgeschweisst würde. Dafür wird ein Vierkantrohr um 45 Grad verdreht in eine Säge eingespannt. Das Rohr liegt weiterhin der Länge nach horizontal, aber um seine Längsachse um 45 Grad gedreht (vom Ende her betrachtet rautenförmig). In dieser Stellung wird das Rohr in einem Winkel von 54,736 Grad abgesägt, genau genommen in einem Winkel, welcher sich errechnet aus Arc Tan aus der Quadratwurzel von 2. Fig 7 zeigt, wie ein in diesem Winkel abgesägtes Vierkantrohr (12) auf eine Zahnscheibe (10) angesetzt würde.

Prinzipiell ist es aber nicht notwendig, dass das Zugrohr ein Vierkantrohr (12) ist, auch andere Querschnitte, z.B. Rundrohr, sind möglich. Das Vierkantrohr wurde vorzugsweise zur Beschreibung der Drehachsrichtung benutzt und hat den weiteren Vorteil, dass sich ein Vierkantzugrohr leichter an den sonstigen Anhängerteilen wie z.B. Achselement oder Ladeflächenaufbau verdrehsicher festschrauben oder festklemmen lässt. Bei einem zur Seite oder nach oben geklapptem Zugrohr-Vorderteil lässt sich durch den langen Hebelarm ein grosses Drehmoment um die Längsachse des am Anhänger befestigten Zugrohr-Hinterteils erzeugen. Hierfür wäre ein Vierkantquerschnitt besser, um das Drehmoment auf das Chassis zu übertragen.

Für die Position des Zugrohr-Vorderteils im zur Seite oder nach oben abgeklappten Zustand ist zu berücksichtigen, dass evtl. die verschiedenen Anbaukomponenten im Weg sind. Diese können sein: Zugkugelkupplung, Stützrad, Stützradklemme, Aufstellfuss, der Griff oder der untere Speicher der Auflaufeinrichtung. Wegen dieser Teile kann es sinnvoll sein, die Drehungen nicht genau im beschrieben Idealwinkel auszurichten. Dadurch können sich sowohl leicht andere Winkel-Stellungen der Drehachse (8) als auch Verdrehwinkel leicht anders als 120 Grad als bevorzugt ergeben. Dazu kann dann auch eine Zähnezahl sinnvoll sein, welche nicht durch 3 teilbar ist (z.B. bei 37 Zähnen ergibt eine Verdrehung um 12 Zähne einen Verdrehwinkel von 116,76 Grad).

Des Weiteren kann es sinnvoll sein, dass statt eines Klappens nach oben auch ein Abklappen nach unten und zu einer Seite gewählt wird, z.B. um den Anhänger mit der Vorderseite erhöht aufzustellen. Dies kann zum Auf- und Abladen interessant sein.

Ein weiteres mögliches Anwendungsgebiet des Gelenks ist das leichte Neigen der Ladefläche. Wenn z.B. bei einer Zähnezahl von 36 Zähnen das Zugrohr nur um ca. 1-3 Zähne aus der Fahrstellung heraus verdreht wird, ist es noch möglich eingekuppelt zu fahren und hiermit die Neigung des Zugrohrs leicht zu verstellen. Allerdings wandert das Zugrohr hierbei schon leicht aus der Fahrzeugmitte, und dieser Zustand wird nicht für das Fahren auf öffentlichen Strassen geeignet sein.

Die Funktion kann aber genutzt werden, um die Ladefläche für das Be- oder Entladen in einen geneigten Zustand zu bringen. Dies ist insbesondere interessant, um mit Fahrzeugen (Motorräder, Roller, Quads, Traktoren) auf die Ladefläche aufzufahren. Dies kann die notwendige Länge oder die Steigung von Auffahrschienen reduzieren oder diese sogar komplett ersetzen. Bei ungebremsten Anhängern ist die Zugkugelkupplung meist fest mit dem Zugrohr verschraubt. Dies erlaubt eine geringe Verdrehung des Zugrohrs im noch am Zugfahrzeug eingekuppelten Zustand. Auflaufeinrichtungen erlauben meist noch die Verdrehung der Zugkugelkupplung um ein paar Grad und damit lässt sich das Zugrohr noch einen oder mehr Zähne weiter verdrehen. Es kann also eine steile Ladefläche erzeugt werden, um den Anhänger zu beladen ohne abzukuppeln.

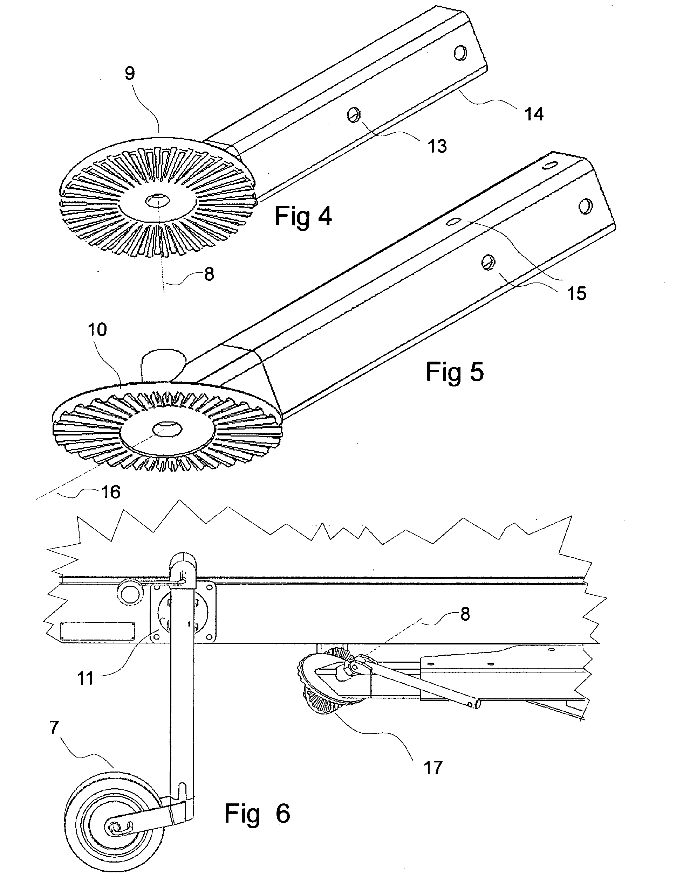

Um dem Anhängerhersteller oder dem Kunden zu ermöglichen, die verschiedenen Klapprichtungen später selber zu wählen, können sämtliche Bohrungen durch das vordere und hintere Zugrohrteil sowohl senkrecht als auch waagerecht (also doppelt) angebracht werden. Dies sind die Bohrungen für die Verbindungen mit z.B. der Zugkugelkupplung, der Auflaufeinrichtung, der Ladefläche, dem Stützrad oder der Achse. Dadurch kann die Deichsel in 4 Orientierungen bezogen auf eine Drehung um 90 Grad um die Längsachse montiert werden. Fig 4 zeigt ein Zugrohr (14) mit Bohrungen (13) für z.B. das Anbringen einer Auflaufeinrichtung nur in eine Richtung. Fig 5 zeigt die doppelt ausgelegten Bohrungen (15), sodass der Anhängerhersteller oder später sogar der Endkunde die Orientierung des Zugrohrs um die Achse (16) in 90 Grad Schritten selber wählen kann. Dies kann z.B. dann interessant sein, wenn der Kunde entscheiden will, ob er den Anhänger in seiner Parkstellung an eine rechte oder an eine linke Wand nahe heranstellt. Die gezeigte Variante erlaubt eine Kombination des Abklappens in Fahrtrichtung links und nach oben.

Die Verwendung eines gekröpften Zugrohrs ist auch möglich. Die Kröpfung kann vor und hinter dem Drehgelenk sein, ist aber vorzugsweise in Fahrtrichtung davor.

Bei der Verwendung des Klappzugrohrs in Kombination mit Auflaufeinrichtungen ist statt dem gebräuchlichen Bremsgestänge ein Bowdenzug zu verwenden.

Als Drehgelenk selber eignen sich z.B. gesenkgeschmiedete Zahnscheiben, welche mit dem Zugrohr verschweisst werden. Herbei sind folgende Varianten denkbar, ggfs. auch Kombinationen hieraus:
- (Fig 4) Eine Zahnscheibe (9), welche an ein wie oben beschrieben raumdiagonal abgesägtes Rohr angeschweisst wird.
- (Fig 5 und 7) Eine Zahnscheibe, welche über die Kontur eines Kreises hinaus noch verlängert ist, z.B. ellipsenförmig (10), um die Berührfläche der schrägen Drehfläche mit dem Zugrohr zu berücksichtigen. Diese in eine Richtung längere Zahnberührfläche hat den Vorteil, dass die durch das Drehmoment im Zugrohr aufgebrachten Druck- und Zugkräfte auf den Zahnring und die Feststellschraube geringer sind. Fig 6 zeigt, dass in abgeklappten Stellungen, also nicht in der Fahrstellung, die beiden ellipsenförmigen Zahnringe sich nicht vollflächig berühren (17).
- (Fig 8) Eine Zahnscheibe als gesenkgeschmiedetes Teil, welches noch zusätzlich in das Zugrohr hineinreicht (18 und 19), wobei das Zugrohr hierbei in dem oben genannten Winkel (20) abgesägt ist und direkt an die Zahnscheibe anschliesst.
- (Fig 9) Eine Zahnscheibe mit einem Anbaukern (21), welcher in ein gerade abgesägtes Zugrohr (22) hineinreicht, um das Absägen als Raumdiagonale zu vermeiden.
- (Fig 10) Eine Zahnscheibe mit einem Anbaukern (23), welcher mehr-stufig (24) in das Zugrohr (25) hineinreicht, sodass mit dem gleichen gesenkgeschmiedeten Teil sowohl z.B. 60x60 mm als auch 70x70 mm Zugrohre verwendet werden können.

Des Weiteren sind auch Zahnscheiben-ähnliche Elemente möglich, die nicht gesenkgeschmiedet sind, bzw. Kombinationen hieraus. Dies können z.B. ausgeschnittene Blechteile sein, welche sich ineinander verzahnen. Auch sind bajonettartige Verbindungen mit Hinterschneidungen denkbar, wie z.B. die Verbindungselemente von Feuerwehrschläuchen.

Auch für Anhänger mit V-Deichsel, bzw. seitlichen Zugholmen, ist es denkbar, diese mit einem Abklappgelenk auszustatten. Während klassische Zugholme vorne im Bereich der Zugkugelkupplung aufeinander zulaufen, wäre es denkbar diesen Schnittpunkt der Zugholme näher an die Ladefläche zu verschieben und diesen Schnittpunkt mittels eines abklappbaren zentralen Zugrohrs mit der Zugkugelkupplung zu verbinden. Damit läßt sich z.B. der Vorteil einer V-Deichsel mit einer abklppbaren Auflaufeinrichtung verbinden.

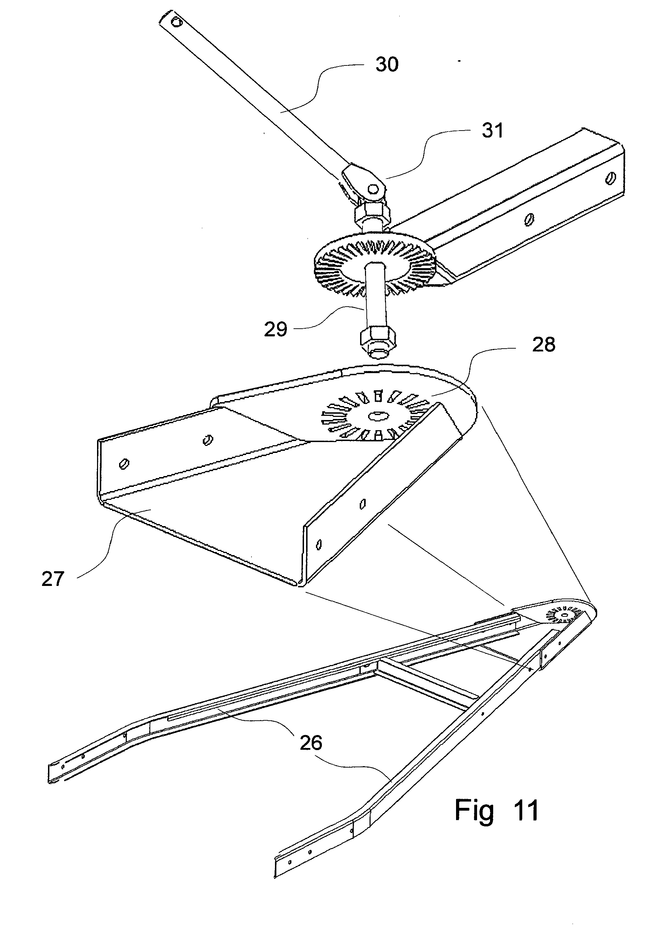

Hierbei kann das Element, in dem die beiden Zugholme vorne verbunden sind, auch gleichzeitig die hintere Zahnscheibe sein. Fig 11 zeigt ein gekantetes und geschweisstes Blechteil (27), welches einerseits die Zugholme (26) verbindet, und andererseits durch strahlenförmige Ausstanzungen (28) ein Gegenelement für eine Zahnscheibe bietet.

Es können auch beide Seiten des Drehelements als Blechteil gefertigt werden, indem kreisförmig verteilt Rastpunkte durch verschieden geformte Blechteile entstehen oder durch hierein eingeschweisste Rastpunkte. Z.B. kann die eine Seite einen Lochkreis haben, z.B. 12 im Kreis mit 70 mm Durchmesser angeordnete Bohrungen mit z.B. 10 mm Durchmesser. Und das Gegenstück hat 12 gleiche Bohrungen, in die aber 12 kurze Rundkopfnieten eingeschweisst sind.

Die Feststellung und Arretierung des Schwenkelements erfolgt idealerweise mit einer Feststellschraube (29) und einem Handhebel (30). Für die Schraube sind Feingewinde zu bevorzugen. Der Handhebel ist entweder an der Schraube oder an der Mutter befestigt und so anzuordnen, dass er trotz der schräg verlaufenden Drehachse noch um 360 Grad gedreht werden kann. Fig 11 zeigt einen Hebel (30) mit einem Gelenk (31), welcher den Vorteil hat, dass er an den Zugrohren vorbeigeführt werden kann, und in 2 Richtungen abgeklappt und gegen Lösen gesichert werden kann (z.B. mit einer Kette). Bei Verwendung von einer zweiten Achse in dem Hebelgelenk analog zu einem Kardangelenk kann der Hebel sogar zu 4 Seiten abgeklappt werden. Des Weiteren sind verstellbare Klemmhebel interessant, bei denen die Stellung durch eine Kerbverzahnung zwischen Kern und Hebel gewählt werden kann.

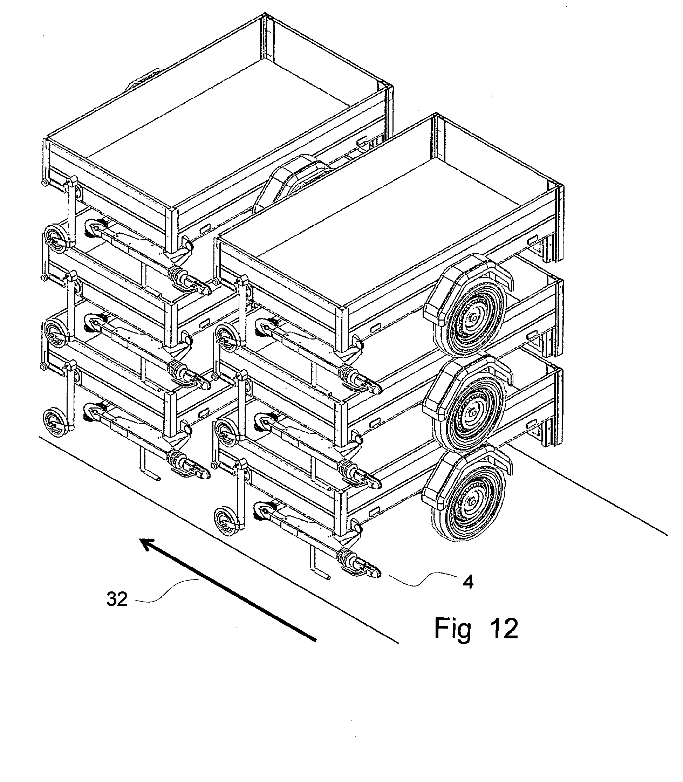

Fig 12 zeigt ein Beispiel für die platzsparende Auslieferung. Die abklappbaren Zugrohre sind sowohl für senkrecht auf die Heckklappe aufgestellte Anhänger interessant als auch wie in Fig 12 gezeigt quer zur Fahrtrichtung (32). Anhänger mit bis zu ca. 225 cm Ladeflächenlänge lassen sich dadurch auf normalen LKWs quer zur Fahrtrichtung aufstellen.

Nicht nur bei der Auslieferung, sondern auch bei der Herstellung, im Fertigwarenlager und im Verkaufsraum für Anhänger lassen sich so Platz- und damit Kostenvorteile schaffen.

## Patentansprüche

1. Schwenkbares Zugrohr für einen Transportanhänger mit zumindest einem Drehgelenk in dem Zugrohr zum Wegschwenken des Zugrohrs in verschiedene Stellungen für den Fahrbetrieb und das Verstauen und dazu passenden Feststelleinrichtungen des Drehgelenks,
**dadurch gekennzeichnet, dass** die Ausrichtung der Drehachse (8) des Zugrohrs diagonal im Raum angeordnet ist.

2. Zugrohr nach Anspruch 1,
**dadurch gekennzeichnet, dass** die raumdiagonale Ausrichtung der Drehachse (8) so angeordnet ist, dass wichtigsten Fahr- und Stau-Positionen (1, 2 und 4) in ca. 120 Grad Verdrehschritten erreicht werden.

3. Zugrohr nach Anspruch 1 und 2,
**dadurch gekennzeichnet, dass** die raumdiagonale Ausrichtung der Drehachse (8) so angeordnet ist, dass das Zugrohr-Vorderteil mittels einer Drehung um ca. 120 Grad um die Drehachse (8) aus der Fahrposition (1) in die Senkrechte (2) geschwenkt werden kann.

4. Zugrohr nach Anspruch 1 und 2,
**dadurch gekennzeichnet, dass** die raumdiagonale Ausrichtung der Drehachse (8) so angeordnet ist, dass das Zugrohr-Vorderteil mittels einer Drehung um ca. 120 Grad um die Drehachse (8) aus der Fahrposition (1) zu einer Seite (4) geschwenkt werden kann, sodass das Zugrohr-Vorderteil danach ca. 90 Grad zur Seite bezogen auf die Fahrtrichtung zeigt.

5. Zugrohr nach Anspruch 1,
**dadurch gekennzeichnet, dass** das Zugrohr-Vorderteil und das Zugrohr-Hinterteil Bohrungen für die Verbindung des Zugrohrs mit angrenzenden Teilen wie z.B. Zugkugelkupplung, Auflaufeinrichtung, Chassis, Stützrad oder Achse aufweist, welche zumindest doppelt ausgelegt sind und jeweils um 90 Grad verdreht (15) um die jeweilige Zugrohrlängsachse angeordnet sind.

6. Zugrohr nach Anspruch 1,
**dadurch gekennzeichnet, dass** zumindest eine Hälfte des Zugrohr-Gelenks als gesenkgeschmiedete Zahnscheibe ausgearbeitet ist.

7. Zugrohr nach Anspruch 1 und 6,
**dadurch gekennzeichnet, dass** zumindest eine Hälfte des Zugrohr-Gelenks als Blechteil mit sternförmig angeordneten Ausstanzungen (28) ausgearbeitet ist, wobei die Zähne oder Erhebungen des Gegenstücks in die Ausstanzungen eingreifen.

8. Zugrohr nach Anspruch 1 und 6,
**dadurch gekennzeichnet, dass** die Zahnscheibe des Gelenks ca. die Form einer Ellipse (10) hat.

9. Zugrohr nach Anspruch 1 und 6,
**dadurch gekennzeichnet, dass** das Zugrohr-Gelenk einen Stumpf in der Querschnittsform der Zugrohrinnenkontur (18 oder 21) hat, passend zum Einstecken in das Zugrohr.

10. Zugrohr nach Anspruch 1, 6 und 9,
**dadurch gekennzeichnet, dass** der Stumpf des Zugrohr-Gelenks mit der Querschnittsform passend zum Zugrohr einen Versatz (oder mehrere) (23) hat, abgestimmt auf verschieden grosse Zugrohr-Querschnittsgrössen.

11. Zugrohr nach Anspruch 1,
**dadurch gekennzeichnet, dass** das Zugrohr-Vorderteil in verschiedenen Verdrehstellungen mit einer Feststellschraube fixiert ist, wobei entweder die Schraube oder die Mutter einen Handhebel (30) aufweist, welcher schwenkbar mit einer Achse (31) oder kardanisch mit 2 Achsen mit der Schraube (29) (oder Mutter) verbunden ist.

12. Zugrohr nach Anspruch 1,
**dadurch gekennzeichnet, dass** das Stützrad am Ladeflächenaufbau oder am hinteren sich nicht mitschwenkenden Zugrohrteil befestigt ist.
